# EUROPÄISCHE PATENTSCHRIFT

(11) **EP 3 245 435 B1**
(45) Veröffentlichungstag und Bekanntmachung des Hinweises auf die Patenterteilung: **25.08.2021**
(21) Anmeldenummer: 15823137.3
(22) Anmeldetag: 23.12.2015
(51) Int. Cl.: F16L 55/045

(54) **DÄMPFUNGSVORRICHTUNG**
DAMPING DEVICE
DISPOSITIF AMORTISSEUR

(30) Priorität: 14.01.2015 DE 102015000418
(43) Veröffentlichungstag der Anmeldung: 22.11.2017
(73) Patentinhaber: Hydac Technology GmbH, 66280 Sulzbach/Saar (DE)
(72) Erfinder: BALTES, Herbert, 66679 Losheim (DE); KLOFT, Peter, 56235 Ransbach-Baumbach (DE); WOHLERS, Alexander, 54439 Saarburg (DE); MACLENNAN, Simon, 28359 Bremen (DE); BEHR, Robert Marins, 28844 Weyhe (DE)
(74) Vertreter: Bartels und Partner, Patentanwälte
(86) Internationale Anmeldenummer: PCT/EP2015/002618
(87) Internationale Veröffentlichungsnummer: WO 2016/112947

(56) Entgegenhaltungen:
- WO-A1-2010/086719
- DE-A1-102006 016 937
- DE-C1- 10 217 080
- GB-A- 586 018
- US-A- 2 401 570
- US-A- 3 036 656
- US-A- 3 473 565
- US-A1- 2008 173 271

## Beschreibung

Die Erfindung betrifft eine Dämpfungsvorrichtung, insbesondere zum Dämpfen oder Vermeiden von Druckstößen, wie Pulsationen, in hydraulischen Versorgungskreisläufen, mit den Merkmalen im Oberbegriff von Anspruch 1.

Dämpfungsvorrichtungen dieser Art sind Stand der Technik. Solche Hydrodämpfer, auch Schalldämpfer oder Silencer genannt, dienen der Minderung von Schwingungen, die durch Druckpulsationen erzeugt sind, die einem betreffenden Hydrosystem periodisch aufgeprägt werden, insbesondere durch den Betrieb von Hydropumpen. Wie in dem Dokument DE 102 17 080 C1 aufgezeigt ist, weisen die bekannten Dämpfungsvorrichtungen ein Dämpfungsgehäuse in Form eines Kreiszylinders auf, der an beiden axialen Endbereichen beispielsweise kugelförmig abgerundet ist, wobei sich Fluideinlass und Fluidauslass koaxial zur Zylinderachse an je einem Endbereich befinden. Für die durch einen Helmholtz-Resonator bewirkte Minderung von Geräuschen, die durch von Druckpulsationen erzeugte Schwingungen verursacht sind, ist das Dämpfungsgehäuse gegenüber dem die Durchströmungsrichtung vorgebenden Dämpfungsrohr zumindest bereichsweise radial erweitert, so dass ein ein Helmholtzvolumen umfassender Raum gebildet ist, mit dem das Dämpfungsrohr über die zumindest eine Abzweigöffnung in Verbindung ist.

Die US 3 473 565 A offenbart eine Dämpfungsvorrichtung nach dem Oberbegriff des Anspruchs 1.

Weitere Dämpfungsvorrichtungen gehen aus der GB 586 018, der US 3 036 656, der DE 10 2006 016 937 A1, der WO2010/086719 A1, der US 2008/ 01 73271 A1 und der US 2 401 570 hervor.

Ausgehend von diesem Stand der Technik stellt sich die Erfindung die Aufgabe, eine Dämpfungsvorrichtung der besagten Gattung zur Verfügung zu stellen, die sich besonders einfach und vorteilhaft in existierende Hydrosysteme integrieren lässt.

Erfindungsgemäß ist diese Aufgabe durch eine Dämpfungsvorrichtung gelöst, die die Merkmale des Patentanspruchs 1 in seiner Gesamtheit aufweist. Demgemäß besteht eine wesentliche Besonderheit der Erfindung darin, dass in der vom Fluideinlass ausgehenden Durchströmungsrichtung die Abzweigöffnungen aufeinanderfolgender Kammern jeweils zunehmende Öffnungsquerschnitte aufweisen.

Es ist ferner vorgesehen, dass im zwischen Fluideinlass und Fluidauslass verlaufenden Strömungsweg innerhalb des Dämpfungsgehäuses ein Fluidfilter angeordnet ist. Dadurch kommt eine gesonderte Filtereinrichtung, wie sie in Hydrosystemen in aller Regel aus Gründen der Betriebssicherheit unverzichtbar ist, in Wegfall. Die Integration des Fluidfilters in das Dämpfungsgehäuse ermöglicht eine besonders kompakte Bauweise bei gleichzeitiger Erhöhung der Betriebssicherheit durch den Wegfall einer verbindenden Verrohrung zwischen Filter und Dämpfer, wobei gleichzeitig eine Verringerung des gesamten Bauraums erreichbar ist, so dass sich die Dämpfungsvorrichtung ohne Schwierigkeiten auch bei geringen, zur Verfügung stehenden Einbauräumen einsetzen lässt. Dadurch ist die erfindungsgemäße Dämpfungsvorrichtung insbesondere auch für mobile Anwendungen mit besonders beengten Platzverhältnissen geeignet, beispielsweise bei Hydrosystemen von Luft- oder Landfahrzeugen.

Zur Bildung einer Mehrzahl von Helmholtz-Resonatoren ist der Raum zwischen der Außenseite des Dämpfungsrohres und der Innenseite des Dämpfungsgehäuses in mehrere getrennte Kammern unterteilt, die jede über mindestens eine Abzweigöffnung in der Wand des Dämpfungsrohres mit dessen Innenraum verbunden sind. Dadurch ist die Dämpfungsvorrichtung gezielt auf die Dämpfung verschiedener Frequenzen einstellbar. Dies ist insbesondere bei im Hydrosystem befindlichen drehzahlvariablen Antrieben vorteilhaft, die einen großen Frequenzbereich als Anregungsspektrum von Schwingungen erzeugen.

Bei besonders vorteilhaften Ausführungsbeispielen ist ein Fluidfilter mit einem kreiszylindrischen Filterelement vorgesehen, das mit zum Dämpfungsrohr koaxialer Zylinderachse in diesem angeordnet ist. Dadurch ist eine besonders kompakte Bauweise realisierbar, wobei durch das Filterelement gleichzeitig eine Verstärkung der Dämpfungswirkung erreichbar ist.

Bei besonders vorteilhaften Ausführungsbeispielen ist das Dämpfungsgehäuse kreiszylindrisch ausgebildet und an beiden Enden durch je einen den Fluideinlass bzw. den Fluidauslass aufweisenden Gehäusedeckel geschlossen, an denen die Enden des sich koaxial zur Zylinderachse erstreckenden Dämpfungsrohres angebracht sind, das an seinem einen Ende mit dem Fluideinlass oder Fluidauslass des betreffenden Gehäusedeckels in Fluidverbindung ist, wobei der Fluideinlass oder Fluidauslass des jeweils anderen Gehäusedeckels mit der Innenseite des Dämpfungsrohres über das Filterelement verbunden ist.

Mit besonderem Vorteil kann die Anordnung so getroffen sein, dass das Filterelement an dem den Fluidauslass aufweisenden Gehäusedeckel derart angebracht ist, dass der Fluidauslass mit dem inneren Filterhohlraum in Verbindung ist, der von einem kreiszylinderförmigen Filtermedium umgeben ist, dessen Außenseite an den Innenraum des Dämpfungsrohres angrenzt. Im Betrieb ist dadurch das Filterelement von der Außenseite des Filtermediums her nach innen durchströmbar, so dass der im Betrieb gegebene Staudruck in für die Stabilität des Filtermediums vorteilhafter Weise an diesem von außen nach innen wirkt und beispielsweise über ein inneres Stützrohr des Filterelements aufnehmbar ist.

Für eine gezielte Abstimmung können Kammern unterschiedlicher Volumina vorgesehen sein.

Diesbezüglich kann die Anordnung mit besonderem Vorteil so getroffen sein, dass in der vom Fluideinlass ausgehenden Durchströmungsrichtung aufeinanderfolgende Kammern jeweils abnehmende Volumina aufweisen. Dadurch lassen sich Resonatoren verwirklichen, die in Aufeinanderfolge auf tiefere und dann zunehmend höhere Grundfrequenzen abgestimmt sind. Für unterschiedliche Kammervolumina können Kammern, die sich auf einem gleichbleibenden Außendurchmesser des Dämpfungsrohres befinden, unterschiedliche axiale Längen aufweisen. Alternativ kann das Dämpfungsrohr einen gestuften Außendurchmesser aufweisen, so dass Kammern unterschiedlicher radialer Ausdehnung gebildet sind, wobei für eine Abstimmung auf tiefe Frequenzen das Dämpfungsrohr vorzugsweise mit einem Längenabschnitt verringerten Durchmessers an dem den Fluideinlass aufweisenden Gehäusedeckel angrenzen kann.

Nachstehend ist die Erfindung anhand von in der Zeichnung dargestellten Ausführungsbeispielen im Einzelnen erläutert. Es zeigen:
- Fig. 1: eine in zentraler Längsebene aufgeschnitten gezeichnete perspektivische Schrägansicht eines Ausführungsbeispiels einer nicht erfindungsgemäßen Dämpfungsvorrichtung, dargestellt in näherungsweise halber Größe einer praktischen Ausführungsform; und
- Fig.2: eine der Fig. 1 entsprechende Darstellung eines erfindungsgemäßen Ausführungsbeispiels.

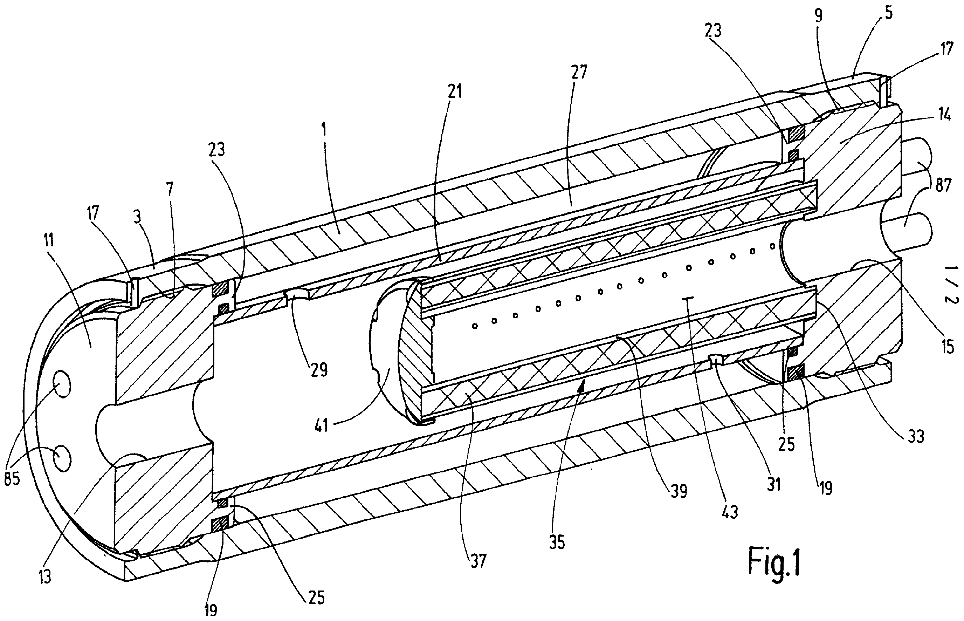

Unter Bezugnahme auf die beigefügten Zeichnungen ist die Erfindung anhand des Beispiels eines sog. Silencers näher erläutert, der nach dem Prinzip eines Helmholtz-Resonators arbeitet. Das in Fig. 1 gezeigte Ausführungsbeispiel weist ein Dämpfungsgehäuse 1 in Form eines kreiszylindrischen Rohrkörpers auf, der in seinen beiden Endbereichen 3 und 5 mit einem Innengewinde 7 bzw. 9 versehen ist. Mit diesen ist am in der Zeichnung links gelegenen Endbereich 3 ein Gehäusedeckel 11 verschraubt, in dem ein zentraler Durchgang einen Fluideinlass 13 für die Zufuhr eines betreffenden Fluids mit aufgeprägten Druckpulsationen bildet. Mit dem Innengewinde 9 am gegenüberliegenden Endbereich 5 ist ein Gehäusedeckel 14 verschraubt, der, wie der andere Gehäusedeckel 11, einen zentralen Durchgang als Fluidauslass 15 aufweist. Beide Deckel 11 und 14 sind als zylindrische Gewindestopfen gleichartig ausgebildet und im eingeschraubten Zustand mittels eines Sicherungsstiftes 17 gesichert. Zur Abdichtung gegenüber dem Dämpfungsgehäuse 1 ist am inneren Ende jedes Deckels 11, 14 ein Dichtring 19 angeordnet. Im eingeschraubten Zustand sind die äußeren Enden der Deckel 11,14 mit den Rohrenden des Dämpfungsgehäuses 1 im Wesentlichen bündig.

Bei dem in Fig. 1 dargestellten Ausführungsbeispiel erstreckt sich ein kreiszylindrisches, auf gesamter Länge einen gleichbleibenden Durchmesser aufweisendes rundes Dämpfungsrohr 21 koaxial zur Achse des Dämpfungsgehäuses 1 zwischen den Gehäusedeckeln 11 und 14. Beide Gehäusedeckel 11 und 14 weisen an den einander zugewandten Innenseiten einen axial vorspringenden Umfangsrand 23 auf, an dessen Außenseite sich der Dichtring 19 für die Abdichtung am Dämpfungsgehäuse 1 befindet. An der Innenseite des jeweiligen Umfangsrandes 23 liegt das zugekehrte Ende des Dämpfungsrohres 21 an, wobei ein Dichtring 25 die Abdichtung bildet. Entsprechend der radialen Dicke der Umfangsränder 23 ist dadurch das Dämpfungsrohr 21 von der Innenwand des Dämpfungsgehäuses 1 in einem Abstand gehalten, durch den zwischen der Außenseite des Dämpfungsrohres 21 und der Innenseite des Dämpfungsgehäuses 1 ein Raum 27 entsteht, der ein Helmholtzvolumen bildet. Für die Verbindung zwischen dem Inneren des Dämpfungsrohres 21 und dem Raum 27 sind in der Nähe des einlassseitigen Gehäusedeckels 11 eine Abzweigöffnung 29 und in der Nähe des auslassseitigen Gehäusedeckels 14 eine Abzweigöffnung 31 in der Rohrwand des Dämpfungsrohres 21 gebildet. Für eine gewünschte Frequenzabstimmung des dadurch gebildeten Helmholtz-Resonators ist die linksseitig gelegene Abzweigöffnung 29 mit einem größeren Öffnungsquerschnitt versehen als die andere Abzweigöffnung 31.

Der auslassseitige Gehäusedeckel 14 weist eine vom Umfangsrand 23 radial nach innen versetzte, axial vertiefte Ringnut 33 auf, die die Aufnahme für ein Filterelement 35 bildet, das sich in kreiszylindrischer Form koaxial zur Zylinderachse im Inneren des Dämpfungsrohres 21 über mehr als dessen halbe Länge erstreckt. Das Filterelement 35 weist ein hohlzylinderförmiges Filtermedium 37 auf, das ein inneres, gelochtes Stützrohr 39 umgibt. Wie bei derartigen Filterelementen üblich, ist am in der Zeichnung linksseitigen Ende des Filterelements 35 eine Endkappe 41 vorgesehen, die eine Einfassung für das Stützrohr 39 und das Filtermedium 37 bildet. Der sich innerhalb des Stützrohres 39 befindende, innere Filterhohlraum 43 geht am auslassseitigen Gehäusedeckel 14 unmittelbar in den Fluidauslass 15 über.

Bei dieser Anordnung bildet das Filterelement 35 einen Teil des Strömungsweges für das über den Fluideinlass 13 zuströmende und über den Fluidauslass 15 abströmende Fluid, wobei dieses das Filtermedium 37 von außen her zu dem die Reinseite bildenden Filterhohlraum 43 hin durchströmt, von wo das Fluid über den unmittelbar angrenzenden Fluidauslass 15 austritt. Dabei bewirkt der aus den Abzweigöffnungen 29 und 31 und dem Raum 27 gebildete Helmholtz-Resonator eine Geräuschdämpfung, die durch das Vorhandensein des im Inneren des Dämpfungsrohres 21 befindliche Filterelement 35 verstärkt wird.

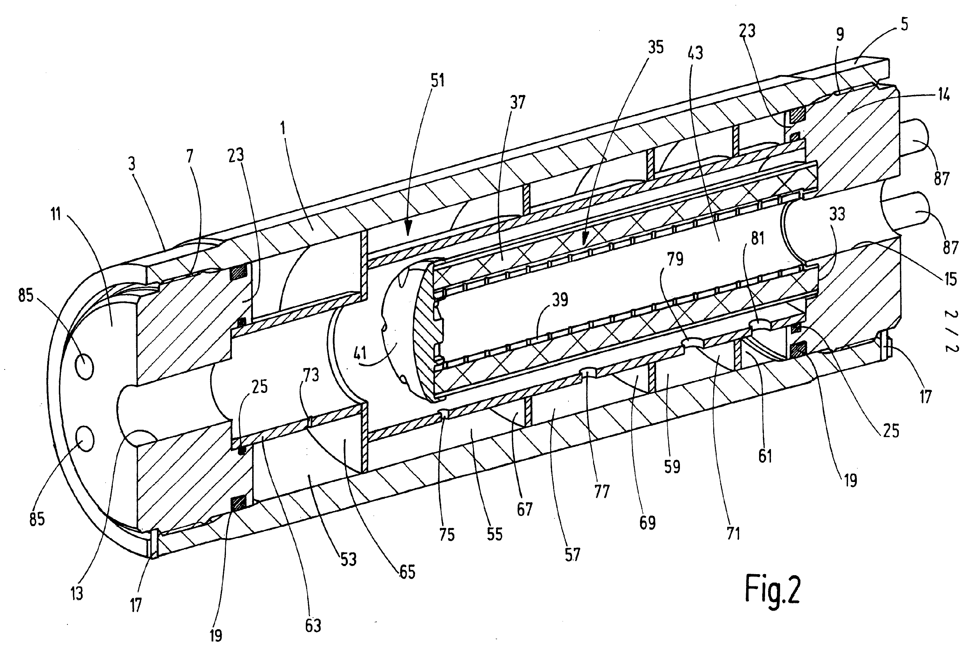

Das Ausführungsbeispiel von Fig. 2 entspricht dem Beispiel von Fig. 1, abgesehen davon, dass kein mit gleichem Durchmesser durchgehendes Dämpfungsrohr, sondern ein im Durchmesser gestuftes Dämpfungsrohr 51 vorgesehen ist und dass außerdem der das gestufte Dämpfungsrohr 51 umgebende Raum in mehrere gesonderte, jeweils ein Helmholtzvolumen bildende Kammern 53, 55, 57, 59 und 61 unterteilt ist. Das Dämpfungsrohr 51 ist derart gestuft, dass sein an den einlassseitigen Gehäusedeckel 11 angrenzender erster Längenabschnitt 63 einen verringerten Durchmesser besitzt, während das Dämpfungsrohr 51 auf dem übrigen Teil seiner bis zum auslassseitigen Gehäusedeckel 14 verlaufenden Länge einen gleichbleibenden Durchmesser besitzt, der dem Durchmesser des Dämpfungsrohres 21 von Fig. 1 entspricht. Wie Fig. 2 zeigt, weist dadurch die einlassseitige erste Kammer 53 eine größere radiale Dicke als die übrigen Kammern 55, 57, 59 und 61 auf. Axial ist das innere Ende der ersten Kammer 53 durch eine Ringscheibe 65 begrenzt, die gleichzeitig die eine Begrenzung der folgenden Kammer 55 bildet. Weitere Ringscheiben 67 bilden jeweils Begrenzungen für die nachfolgenden Kammern 55, 57, 59 und 61. Für jede Kammer ist eine die Wand des Dämpfungsrohres 51 durchgreifende Abzweigöffnung vorgesehen, die in Fig. 2 von links nach rechts mit 73, 75, 77, 79 und 81 bezeichnet sind. Für die gezielte Abstimmung der Dämpfungsvorrichtung auf gewünschte Frequenzbereiche sind sowohl die Volumina als auch die Form der Kammern, die die Helmholtzvolumina für mehrere Helmholtz-Resonatoren bilden, unterschiedlich. Wie bereits erwähnt, hat die einlassseitige Kammer 53 eine größere radiale Dicke als die diesbezüglich jeweils gleich dicken, folgenden Kammern, jedoch ist die axiale Länge der ersten Kammer 53 kürzer als diejenige der zweiten Kammer 55. Die axialen Längen der weiteren Kammern 55, 57, 59 und 61 nehmen in Richtung auf den auslassseitigen Gehäusedeckel 14 jeweils ab. Im Gegensatz hierzu sind die Öffnungsquerschnitte der Abzweigöffnungen 73, 75, 77, 79, 81 desto größer, je geringer das Volumen der zugehörigen Kammer ist. Bei dieser Anordnung ergibt sich für die einlassseitige erste Kammer 53 eine Abstimmung auf tiefere Töne, während die drauffolgenden Kammern 55, 57, 59, 61 jeweils auf höhere Tonfrequenzen abgestimmt sind. In Verbindung mit der zusätzlichen Geräuschdämpfung durch das eingebaute Filterelement 35 ist dadurch eine hoch-effiziente Dämpfung erzielbar.

Für die Befestigung der Dämpfungsvorrichtung an entsprechenden Drittbauteilen sind am einlassseitigen Gehäusedeckel 11 in zum Fluideinlass 13 symmetrischer Anordnung vier Gewindebohrungen 85 für Befestigungs- und Anschlussmittel vorgesehen. An dem auslassseitigen Gehäusedeckel 14 sind in entsprechender Anordnung zum Fluidauslass 15 vier Gewindebolzen 87 vorgesehen. Wie die Figuren zeigen, ist das Filterelement 35 ausschließlich mit dem auslassseitigen Gehäusedeckel 14 in Verbindung, so dass für einen Filterwechsel lediglich ein Gehäusedeckel abgenommen werden muss, ohne die Dämpfungsvorrichtung als Ganzes aus dem System herausnehmen zu müssen, da es genügt, den Zustrom zum Fluideinlass 13 zu sperren.

## Patentansprüche

1. Dämpfungsvorrichtung, insbesondere zum Dämpfen oder Vermeiden von Druckstößen, wie Pulsationen, in hydraulischen Versorgungskreisläufen, mit einem einen Dämpfungsraum umgebenden Dämpfungsgehäuse (1), das mindestens einen Fluideinlass (13) und einen Fluidauslass (15) sowie ein im Strömungsweg zwischen diesen befindliches Dämpfungsrohr (51) aufweist, das zur Bildung eines Helmholtzresonators in einem innerhalb seiner Länge gelegenen Bereich mindestens eine die Rohrwand durchgreifende, zu einem Helmholtzvolumen (53, 55, 57, 59, 61) innerhalb des Dämpfungsgehäuses (1) führende Abzweigöffnung (73, 75, 77, 79, 81) aufweist, wobei im zwischen Fluideinlass (13) und Fluidauslass (15) verlaufenden Strömungsweg innerhalb des Dämpfungsgehäuses (1) ein Fluidfilter (35) angeordnet ist, **dadurch gekennzeichnet, dass** zur Bildung einer Mehrzahl von Helmholtz-Resonatoren der Raum zwischen der Außenseite des Dämpfungsrohres (51) und der Innenseite des Dämpfungsgehäuses (1) in mehrere getrennte Kammern (53, 55, 57, 59, 61) unterteilt ist, die jede über mindestens eine Abzweigöffnung (73, 75, 77, 79, 81) in der Wand des Dämpfungsrohres (51) mit dessen Innenraum verbunden sind, und dass in der vom Fluideinlass (13) ausgehenden Durchströmungsrichtung die Abzweigöffnungen (73, 75, 77, 79, 81) aufeinanderfolgender Kammern (53, 55, 57, 59, 61) jeweils zunehmende Öffnungsquerschnitte aufweisen.

2. Dämpfungsvorrichtung nach Anspruch 1, **dadurch gekennzeichnet, dass** das Fluidfilter ein kreiszylindrisches Filterelement (35) aufweist, das mit zum Dämpfungsrohr (51) koaxialer Zylinderachse in diesem angeordnet ist.

3. Dämpfungsvorrichtung nach Anspruch 1 oder 2, **dadurch gekennzeichnet, dass** das Dämpfungsgehäuse (1) kreiszylindrisch ausgebildet und an beiden Enden durch je einen den Fluideinlass (13) bzw. den Fluidauslass (15) aufweisenden Gehäusedeckel (11, 14) geschlossen ist, an denen die Enden des sich koaxial zur Zylinderachse erstreckenden Dämpfungsrohres (51) angebracht sind, das an seinem einen Ende mit dem Fluideinlass (13) oder Fluidauslass (15) des betreffenden Gehäusedeckels (11, 14) in Fluidverbindung ist, und dass der Fluideinlass (13) oder Fluidauslass (15) des jeweils anderen Gehäusedeckels (11, 14) mit der Innenseite des Dämpfungsrohres (51) über das Filterelement (35) verbunden ist.

4. Dämpfungsvorrichtung nach Anspruch 3, **dadurch gekennzeichnet, dass** das Filterelement (35) an dem den Fluidauslass (15) aufweisenden Gehäusedeckel (14) derart angebracht ist, dass der Fluidauslass (15) mit dem inneren Filterhohlraum (43) in Verbindung ist, der von einem hohlzylinderförmigen Filtermedium (37) umgeben ist, dessen Außenseite an den Innenraum des Dämpfungsrohres (51) angrenzt.

5. Dämpfungsvorrichtung nach einem der vorstehenden Ansprüche, **dadurch gekennzeichnet, dass** die Kammern (53, 55, 57, 59, 61) unterschiedlicher Volumina aufweisen.

6. Dämpfungsvorrichtung nach Anspruch 5, **dadurch gekennzeichnet, dass** in der vom Fluideinlass (13) ausgehenden Durchströmungsrichtung aufeinanderfolgende Kammern (53, 55, 57, 59, 61) jeweils abnehmende Volumina aufweisen.

7. Dämpfungsvorrichtung nach einem der vorstehenden Ansprüche, **dadurch gekennzeichnet, dass** das Dämpfungsrohr (51) einen gestuften Außendurchmesser aufweist und mit einem Längenabschnitt (63) verringerten Durchmessers an den den Fluideinlass (13) aufweisenden Gehäusedeckel (11) angrenzt.

## Claims

1. Damping device, in particular for damping or preventing pressure surges, such as pulsations, in hydraulic supply circuits, with a damping housing (1) surrounding a damping space, which damping housing has at least one fluid inlet (13) and one fluid outlet (15) as well as a damping tube (51) located in the flow path therebetween and, in order to form a Helmholtz resonator, has, in a region located within its length, at least one branch opening (73, 75, 77, 79, 81) which passes through a tube wall and leads to a Helmholtz volume (53, 55, 57, 59, 61) within the damping housing (1), wherein a fluid filter (35) is arranged withing the damping housing (1) in the flow path running between the fluid inlet (13) and the fluid outlet (15), **characterised in that**, for forming a plurality of Helmholtz resonators, the space between the outside of the damping tube (51) and the inside of the damping housing (1) is divided into a plurality of separate chambers (53, 55, 57, 59, 61), each of which is connected to the internal space of the damping tube (51) via at least one branch opening (73, 75, 77, 79, 81) in the wall thereof, and **in that** the branch openings (73, 75, 77, 79, 81) of successive chambers (53, 55, 57, 59, 61) each have increasing opening cross-sections in the direction of flow starting from the fluid inlet (13).

2. Damping device according to claim 1, **characterised in that** the fluid filter has a cylindrical filter element (35) arranged therein with its cylinder axis coaxial with the damping tube (51).

3. Damping device according to claim 1 or 2, **characterised in that** the damping housing (1) is cylindrical and is closed at both ends by one housing cover (11, 14) in each case which has the fluid inlet (13) and the fluid outlet (15) respectively, to which housing cover the ends of the damping tube (51) that extends coaxially with the cylindrical axis are attached, which damping tube is in fluid communication at its one end with the fluid inlet (13) or fluid outlet (15) of the relevant housing cover (11, 14), and **in that** the fluid inlet (13) or fluid outlet (15) of the respective other housing cover (11, 14) is connected to the inside of the damping tube (51) via the filter element (35).

4. Damping device according to claim 3, **characterised in that** the filter element (35) is attached to the housing cover (14) having the fluid outlet (15) in such a manner that the fluid outlet (15) is in communication with the inner filter cavity (43) which is surrounded by a hollow-cylindrical filter medium (37), the outside of which is adjacent to the internal space of the damping tube (51).

5. Damping device according to one of the preceding claims, **characterised in that** the chambers (53, 55, 57, 59, 61) have different volumes.

6. Damping device according to claim 5, **characterised in that** successive chambers (53, 55, 57, 59, 61) each have decreasing volumes in the flow direction starting from the fluid inlet (13).

7. Damping device according to one of the preceding claims, **characterised in that** the damping tube (51) has a stepped external diameter and, with a length segment (63) of reduced diameter, is adjacent to the housing cover (11) having the fluid inlet (13).

## Revendications

1. Dispositif d'amortissement, notamment pour amortir ou empêcher des coups de bélier, comme des pulsations, dans des circuits hydrauliques d'alimentation, comprenant une enveloppe (1) d'amortissement, qui entoure un espace d'amortissement et qui a au moins une entrée (13) de fluide et une sortie (15) de fluide, ainsi qu'un tube (51) d'amortissement, qui se trouve entre celles-ci dans le trajet d'écoulement et qui, pour la formation d'un résonnateur de Helmholtz a, dans une partie mise à l'intérieur de sa longueur, au moins une ouverture (73, 75, 77, 79, 81) de dérivation traversant la paroi du tube et menant à un volume (53, 55, 57, 59, 61) de Helmholtz à l'intérieur de l'enveloppe (1) d'amortissement, dans lequel un filtre (35) de fluide est monté à l'intérieur de l'enveloppe (1) d'amortissement dans le trajet d'écoulement s'étendant entre l'entrée (13) de fluide et la sortie (15) de fluide, **caractérisé en ce que** pour, la formation d'une pluralité de résonnateurs de Helmholtz, l'espace entre la face extérieure du tube (51) d'amortissement et la face intérieure de l'enveloppe (1) d'amortissement est subdivisée en plusieurs chambres (53, 55, 57, 59, 61) distinctes, qui communiquent chacune par au moins une ouverture (73, 75, 77, 79, 81) de dérivation dans la paroi du tube (51) d'amortissement avec son espace intérieur, et
**en ce que** les ouvertures (73, 75, 77, 79, 81) de dérivation de chambres (53, 55, 57, 59, 61) successives dans le sens d'écoulement à partir de l'entrée (13) du fluide ont des sections transversales d'ouverture respectivement croissantes.

2. Dispositif d'amortissement suivant la revendication 1, **caractérisé en ce que** le filtre de fluide a un élément (35) de fluide cylindrique de section droite circulaire, qui est monté dans le tube (51) d'amortissement en ayant son axe de cylindre co-axial à celui-ci.

3. Dispositif d'amortissement suivant la revendication 1 ou 2, **caractérisé en ce que** l'enveloppe (1) d'amortissement est constituée en étant cylindrique de section droite circulaire et est fermée aux deux extrémités par respectivement des couvercles (11, 14) d'enveloppe ayant l'entrée (13) de fluide ou la sortie (15) de fluide où sont montées les extrémités du tube (51) d'amortissement s'étendant co-axialement à l'axe du cylindre et en communication fluidique à l'une de ses extrémités avec l'entrée (13) de fluide ou la sortie (15) de fluide, du couvercle (11, 14) concerné de l'enveloppe et **en ce que** l'entrée (13) de fluide ou la sortie (15) de fluide de respectivement l'autre couvercle (11, 14) de l'enveloppe communique avec le côté intérieur du tube (51) d'amortissement en passant par l'élément (35) de filtre.

4. Dispositif d'amortissement suivant la revendication 3, **caractérisé en ce que** l'élément (35) de filtre est monté sur le couvercle (14) de l'enveloppe ayant la sortie (15) de fluide de manière à ce que la sortie (15) de fluide communique avec la cavité (43) intérieure du filtre, qui est entourée d'un milieu (37) filtrant en forme de cylindre creux, dont la face extérieure est voisine de l'intérieur du tube (51) d'amortissement.

5. Dispositif d'amortissement suivant l'une des revendications précédentes, **caractérisé en ce que** les chambres (53, 55, 57, 59, 61) ont des volumes différents.

6. Dispositif d'amortissement suivant la revendication 5, **caractérisé en ce que** des chambres (53, 55, 57, 59, 61) se succédant dans le sens de l'écoulement à partir de l'entrée (13) de fluide ont respectivement des volumes décroissants.

7. Dispositif d'amortissement suivant l'une des revendications précédentes, **caractérisé en ce que** le tube (51) d'amortissement a un diamètre extérieur en palier et est voisin par une partie (63) longitudinale de diamètre diminué du couvercle (11) de l'enveloppe ayant l'entrée (13) de fluide.
